# EUROPEAN PATENT SPECIFICATION

(11) **EP 3 807 063 B1**
(45) Date of publication and mention of the grant of the patent: **08.01.2025**
(21) Application number: 19737904.3
(22) Date of filing: 10.06.2019
(51) Int. Cl.: B26D 1/40, B26D 5/00, B26F 1/20, B26F 1/38, B26D 1/00, G06N 20/00

(54) **DEVICE WITH ROTATING BLADES, MACHINE COMPRISING SAID DEVICE, AND RELATED METHOD**
VORRICHTUNG MIT ROTIERENDEN KLINGEN, MASCHINE MIT DIESER VORRICHTUNG UND ENTSPRECHENDES VERFAHREN
DISPOSITIF À LAMES ROTATIVES, MACHINE COMPRENANT LEDIT DISPOSITIF, ET PROCÉDÉ ASSOCIÉ

(30) Priority: 15.06.2018 IT 201800006343
(43) Date of publication of application: 21.04.2021
(60) Divisional application: 24201176.5
(73) Proprietor: Valmet Tissue Converting S.p.A., 55100 Lucca (IT)
(72) Inventor: MONTAGNANI, Franco, 56036 Palaia (PI) (IT)
(74) Representative: Mannucci, Michele
(86) International application number: PCT/IB2019/054813
(87) International publication number: WO 2019/239283

(56) References cited:
- EP-A1- 3 243 614
- WO-A1-2018/142435
- DE-A1- 4 336 955
- US-A- 4 984 490
- US-A- 5 125 302
- US-A1- 2014 331 833

## Description

### TECHNICAL FIELD

The present invention relates to devices with rotating blades for perforating or cutting a continuous web material. Some embodiments specifically concern perforating devices for perforating a web material made of paper, for example and especially tissue paper. Devices of this kind are used in particular in rewinders for the production of rolls of cellulosic webs, such as toilet paper rolls, kitchen towels and the like. Machines and methods using perforating devices for converting web materials are the subject of the present disclosure. Other embodiments relate to cutting devices for cutting a web material into individual sheets.

### BACKGROUND ART

In the industry of converting continuous web materials, such as for example continuous webs or plies of cellulosic material, such as tissue paper, usually a continuous web material is fed to a perforating device, which perforates the web material in a direction transverse to the feeding direction, to divide the continuous web material into individual sheets, separable by tearing when used. In this way, for example, rolls of paper towels, toilet paper or the like are produced, constituted by sheets separable along the perforation lines.

In the present description and the attached claims, perforation line means a line in which sections of cut web material alternate with sections of uncut web material. The perforation lines constitute weakening lines, along which the web material can be torn, for example to separate the individual sheets into which a continuous web of cellulosic material is subdivided.

The sections of cut web material are preferably longer than the uncut ones. In this way, the perforation lines create weakening areas in the web material, which can therefore be easily torn both for the uses for which it is intended, and to perform some normal processing operations. For example, in the field of paper converting, such as tissue paper converting, the perforation lines are used to tear the web material when a roll has been completely wound and a new roll shall be wound.

Making a proper perforation line is important to obtain a good quality product, where sheets can be easily separated from one another along the perforation lines. If the perforation line is required also in the converting step, for example to severe the continuous web material at the end of a roll winding to start the winding of a new roll, making a proper perforation line of good quality is essential to avoid jamming during the automatic and continuous processing of the web material during the winding step and during the exchange phase, i.e. the passage from a roll to the following one.

The perforating device is usually arranged in or on a rewinder or other converting machine.

Examples of perforating devices and rewinders comprising such devices are disclosed in EP 0454633, US 5,284,304, US 5,125,302, US 6,431,491, WO00/73029. DE4336955, forming the basis for the preambles of the independent claims, relates to a device for adjusting a cutting blade for cutting web material.

Perforating devices normally comprise a rotating blade-holder, on which one or more blades are mounted. The blades co-act with a fixed anvil blade. The web material passes between the blade-holder and the anvil blade to be perforated according to transversal perforation lines, usually equidistant from one other and perpendicular to the feeding direction of the web material.

Rotary perforating blades and anvil blade must perform a proper perforation, without damaging the web material and without leaving unperforated areas. To this end, blades and anvil blade must be precisely "tuned" and adjusted. This operation is long and complex and may require the intervention of specialized personnel.

The blades and the anvil blade are subject to wearing and can thus require repeated adjustments over time, and must be replaced periodically. The replacement as well requires setting and adjusting before the machine, on which the perforating device is installed, can be started again. The blades and/or the anvil blade can also be subject to breaking due to dynamic stresses. In this case it is necessary to replace them immediately.

Incorrect adjustment of the blades and the anvil blade can cause abnormal mechanical stresses, vibrations, excessive wear and, ultimately, damages to the machine and low quality of the finished product.

To avoid wasting large quantities of production and to preserve the machinery lifespan, it is important to identify promptly any malfunctioning of the perforating device or to increase the adjustment speed.

In some paper converting machines, especially for tissue paper, blade devices are provided for cutting a web material into individual sheets, separated from one other, instead of joined along perforation and tear lines. For example, cutting devices with rotating blades and fixed anvil blade are used in interfolding machines for the production of packages of folded and interfolded sheets. In some embodiments of these machines, cutting is performed with a rotating blade-holder roller, supporting a plurality of constant-pitch blades, which co-act with a fixed anvil blade. In these cutting devices problems similar to those encountered in perforating devices may occur.

US 5,125,302 discloses a perforator, in which a plurality of straight blades are supported by a rotating roller and co-act with a helical anvil blade, supported by a pendular element. This document generically indicates the possibility of providing a sensor for detecting abnormal operating conditions, in order to promptly move the helical anvil blade away from the roller of the rotating blades with an oscillating movement. No processing of the signal detected by the sensor is provided, nor the type of signal to be used is described.

Hence, it is necessary to improve the perforating devices and the cutting devices in order to alleviate or eliminate one or more of the drawbacks or limitations of the prior art devices.

### SUMMARY

The improved device according to the present invention is defined in claim 1. According to a first aspect, a web material processing device with rotating blades is provided, comprising a rotating blade-holder, which rotates around a rotation axis and on which a group of rotating blades is arranged. The device also comprises an anvil blade carried on a support structure and adapted to co-act with the group of rotating blades. The device also comprises a sensor adapted to detect a parameter indicative of a mutual interaction between the group of rotating blades and the anvil blade. The signal provided by the sensor can be used to detect malfunctions, adjustment failures, breakages or other irregularities in the device operation.

As it will be explained below, the blades and the anvil blade can be configured to perforate the web material, or to cut it into individual sheets.

The following description will refer in particular to a group of rotating blades carrying a plurality of blades, but it is also possible that the group of rotating blades comprises a single blade.

The rotating blade(s) and the anvil blade are preferably configured to perform a scissor action on the web material. This means that the rotating blade and anvil blade co-act gradually and are in mutual contact at a point that moves from one end to the other of the blade and the anvil blade during the rotation. In this way, the action performed on the web material is gradual, and it is possible to obtain a signal of mutual co-action, i.e. of mutual interaction, generated by the sensor based on the detected parameter, the signal extending over a time span that substantially lasts for the time of interaction between the (or each) rotating blade and the anvil blade, during the movement of the point of contact between the blade and the anvil blade.

The signal provided by the sensor is advantageously processed by a central control unit, which can perform various functions. For example, the central control unit can be used to signal a failure or malfunction based on the analysis of the signal. In other embodiments, it is possible to provide that the control unit orders an automatic adjustment of one or more operating parameters of the device, in order to eliminate or reduce an anomaly in operation. For example, the central control unit may send to suitable servo-actuators a command for adjusting the mutual distance between anvil blade and rotating blade(s).

As it will be clearly apparent from the description below of embodiments of the invention, while a blade and the anvil blade co-act performing a scissor-like cut, and the point of mutual contact thereof moves along the (continuous or discontinuous) cutting edges of the blade and the anvil blade, the parameter detected by the sensor is detected over time to generate a time signal, which can be variable from the moment when the contact between the blade and the anvil blade starts to the moment when the contact ends. The pattern of the signal over the time, which corresponds to the pattern of the detected parameter, can be used for a plurality of actions, adjustments or signaling concerning the operation of the perforating device or of the cutting device comprising the blade and the anvil blade.

The device described herein is therefore substantially different from that illustrated, for example, in US 5,125,302, where the detected signal does not correlate with the gradual displacement of the point of contact between the blade and the anvil blade.

The central control unit can be any unit equipped with control ability, such as a PLC, a micro-computer, a mini-computer, and can be dedicated to controlling the device. In other embodiments, the central control unit can be a unit used for controlling the entire machine, for example a rewinder, in which the device with rotating blades is installed or with which it is associated. In other embodiments, the central control unit can be used also to control several units, stations or portions of a converting line, in which the device with rotating blades is placed.

The present invention further concerns a machine for converting a web material, as defined in claim 13, comprising a feed path for a web material, along which a device of the type defined above is arranged. The machine can be for example a rewinder, or an interfolding machine, or any other machine in which it is required to perforate or cut a continuous web material by means of a group of rotating blades co-acting with an anvil blade, especially configured to perform a scissor-like cut or a scissor-like perforation.

According to a further aspect, the invention relates to a method for processing a continuous web material. The method is defined in claim 16. In embodiments, the method comprises the steps of:
feeding the continuous web material along a feed path between a blade-holder comprising a group of rotating blades and an anvil blade;
acting on the web material, for example to perform perforation or cutting lines through co-action between the group of rotating blades and the anvil blade, wherein the group of rotating blades and the anvil blade act on the web material with a scissor-like cut, so that each rotating blade and the anvil blade co-act at a point that moves from a first end of the rotating blade to a second end of the rotating blade during the rotation of the rotating blade;
detecting at least one parameter indicative of a mutual interaction between the group of rotating blades and the anvil blade, by means of a sensor generating a signal of mutual interaction between blades and anvil blade, said signal extending over a time span which substantially lasts for the time of interaction between the (or each) rotating blade and the anvil blade.

Essentially, the method provides for obtaining, through the sensor, a signal which has a time pattern during the interval of co-action between blade and anvil blade, i.e. during the interval when a same blade is in contact with the anvil blade and the point of mutual cooperation between the blade and anvil blade moves along the cutting edges of the blade and the anvil blade. The pattern over time of the signal provides useful information for managing the device, and it is therefore analyzed and/or processed to this end. Examples of analysis of this time-varying signal, and of actions that can be performed on the basis of this signal, will be described below.

### BRIEF DESCRIPTION OF THE DRAWING

The invention will be better understood by following the description and the accompanying drawing, which shows a non-limiting example of embodiment of the invention. More in particular, in the drawing:
Fig.1 is a schematic side view of a rewinder comprising the perforating device of the present invention, with a vibration sensor not falling within the scope of the claims;
Fig. 2 is a view according to II-II in Fig. 1;
Figs. 3A, 3B is an explanatory diagram of the generation of the vibratory signal detected on the perforating device;
Fig. 4 is a diagram showing the signal detected by the vibration sensor as a function of the number of revolutions;
Fig. 5 is a polar diagram of the detected signal;
Fig. 6 is a schematic side view of a further embodiment of the perforating device according to the claims;
Figs. 7, 8, 9 and 10 are diagrams illustrating a signal detected by the sensor of the perforating device of Fig.6 in three different operating conditions;
Fig. 11 is a schematic side view of a further embodiment of the perforating device, not falling within the scope of the claims;
Figs. 12 is a diagram showing a signal detected by the sensor of the perforating device of Fig.11;
Fig.13 is a view of an interfolding machine with cutting devices, to which a sensor can be applied;
Fig.14 shows a diagram of a further embodiment of the perforating device;
Fig. 15 is an diagram showing signals generated by load cells of the device of Fig. 14; and
Figs. 16A, 16B are details of a further embodiment.

### DETAILED DESCRIPTION OF EMBODIMENTS

Briefly, according to a first aspect, cutting devices and perforating devices are described, comprising a rotating blade-holder that is equipped with at least one blade, and preferably with a plurality of blades, each of which co-acts with a preferably stationary anvil blade. On the support structure, or in any case associated therewith, at least one vibration sensor is provided. In some embodiments, the sensor detects the vibrations induced by the co-action of the rotating blade(s) with the anvil blade. The vibrations cyclically vary depending on the rotation, and provide useful information on the operation of the perforating device. The cyclical variations are correlated to the time interval of mutual cooperation between each rotating blade and the anvil blade, while the point of mutual contact between them moves along the cutting edge of the blade and the anvil blade.

In a different embodiment, it is possible to detect the proper execution of the perforation or of the cut (according to the device) by exploiting the conductivity of the perforating blades. In practice, the fixed anvil blade is electrically insulated, and a direct voltage, for example 24 V, is applied thereto. The rotating blade holder is connected to ground. With an electric parameter sensor, for example a voltage sensor, the voltage between an end of the fixed anvil blade and an end of the rotating blade holder is measured. The voltage signal read by the sensor contains information concerning the mutual interaction between the fixed anvil blade and the rotating blades

More generally, the perforating or cutting device comprises a sensor adapted to detect at least one parameter, for example a mechanical, acoustic or electric parameter, containing information about the mutual interference, i.e. about the cooperation between the rotating blade(s) and the fixed anvil blade. By processing the signal provided by the sensor it is possible to detect any malfunctions. It is also possible to obtain useful information for the correct adjustment of the perforating device or of the cutting device, for example to position properly the anvil blade and the rotating blades, in order to have a correct mutual cooperation or interaction.

In the present description, "sensor" refers to any device, member or assembly of parts, members or elements, adapted to detect at least one parameter indicative of the mutual interaction between the rotating perforation blade(s) and the anvil blade.

Turning now to the drawings, embodiments of a perforating device will be initially described, i.e. of a device adapted to make perforation lines, preferably equidistant from one other, along a web material, for example to subdivide it into a plurality of sheets that can be separated by tearing along the perforation lines.

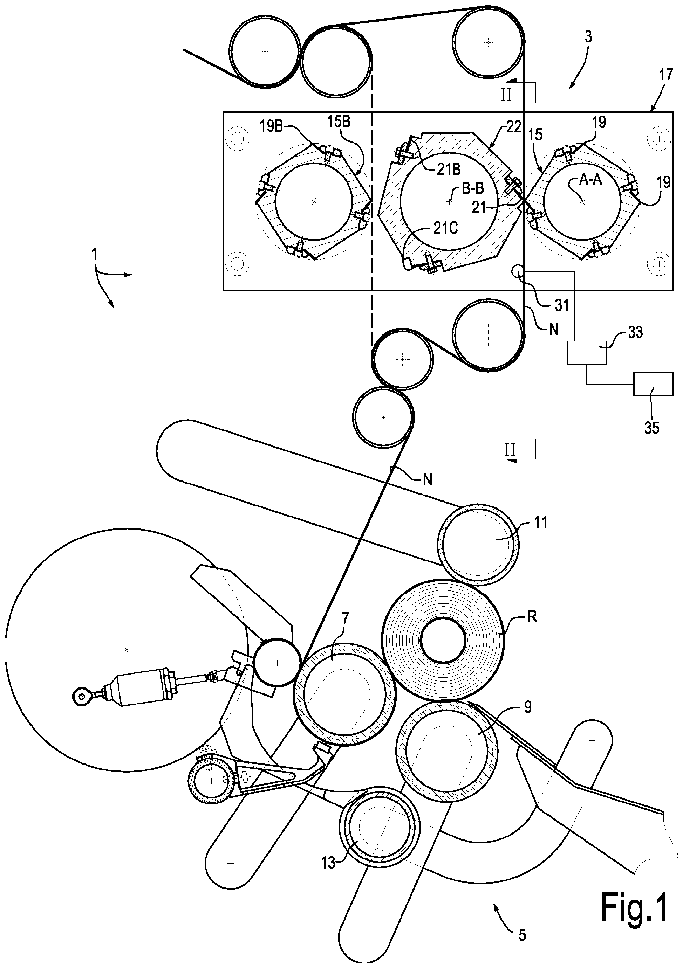

Fig.1 shows schematically a rewinder 1, equipped with a perforating device 3. The rewinder 1 is shown as an example of a generic machine for processing a continuous web material N. The structure of the rewinder 1 is illustrated just by way of example and may vary as known to those skilled in the art. In general, the rewinder 1 can be a peripheral rewinder, preferably an automatic continuous peripheral rewinder, i.e. capable of producing, in rapid sequence, automatically and without stops, rolls R of wound web material N. The rewinder 1 can comprise a winding head 5 equipped with a plurality of motorized winding rollers 7, 9, 11, 13 and other members known to those skilled in the art. Embodiments of rewinding machines are described for example in EP 2621844, EP 0694020, EP 2655227.

Although in the present description the perforating device 3 is described in combination with a rewinder 1, which produces rolls of wound material, in other embodiments the perforating device 3 can be combined with one or more machines for processing a web material to produce different items. For example, the perforating device 3 can be associated with a machine for producing packages formed of a continuous web material perforated and folded in a zig-zag pattern.

The perforating device 3 comprises a rotating blade-holder 15, held on a support structure 17, for example comprising two opposite sides 17A, 17B, between which the blade-holder 15 is arranged. The blade-holder 15 rotates around a rotation axis AA. In some embodiments the blade holder 15 is provided with a group of perforating blades. In general terms, the group of perforating blades can also comprise a single perforating blade. In preferred embodiments, the blade holder 15 is provided with a plurality of perforating blades. In the illustrated example, the blade holder 15 is provided with four perforating blades 19, preferably arranged at the same angular pitch from one another around the rotation axis A-A of the rotating blade-holder 15.

To obtain perforation lines, instead of a complete cut of the web material, the perforating blades 19 or the anvil blade 21 have a toothed, i.e. discontinuous cutting edge, with notches at which the web material remains intact, i.e. it is not cut, forming continuity sections.

The perforating device 3 also comprises an anvil blade 21 carried by the support structure 17 and extending between the two sides 17A, 17B, similarly to the blade-holder 15. The anvil blade 21 is preferably fixed or stationary with respect to the support structure 17. In the present description, "fixed" or "stationary" means that the anvil blade does not participate in the rotation movement generating the perforation of the web material N. This does not exclude that the anvil blade moves. For example, the anvil blade 21 can be provided with a reciprocating translation movement parallel to the longitudinal extension thereof, so as to avoid concentration of wear due to the toothed shape of the perforating blades 19. Furthermore, the anvil blade 21 can be provided with a translation and/or rotation movement in order to perform an adjustment, or to select one or the other of several anvil blades provided in the perforating device 3, as it will be better explained below.

In the illustrated embodiment, the anvil blade 21 is held by a beam 22, extending in a direction approximately parallel to the rotation axis AA of the blade-holder 15. In some embodiments, as illustrated in the attached drawing, further additional anvil blades can be provided, indicated with 21B, 21C, held for example by the same beam 22. The beam 22 can rotate in stepped fashion around an axis B-B, so as to selectively bring into operation the one or the other of the anvil blades 21, 21A, 21B.

The presence of several perforating anvil blades 21, 21B, 21C can be useful for example to quickly replace a worn anvil blade with another anvil blade. In some embodiments each anvil blades 21, 21B, 21C can even have different characteristics, for example they can have different toothing to allow a change in the type of production.

The beam 22 can be mounted on the sides 17A, 17B by means of an eccentric support so that a small rotation of the beam 22 moves the blade 21, 21B, 21C closer or further away, adjusting the interference between the rotating blades 19 and the anvil blade 21, 21B, 21C.

The web material N is fed along a path that extends between the rotating blade-holder 15 and the anvil blade 21, so as to be subjected to the action of the perforating blades 19 and of the anvil blade 21.

To obtain a gradual perforation along the width of the web material N, the anvil blade 21 can be helical and the blades 19 can be straight, i.e. they can be arranged parallel to the rotation axis A-A of the blade-holder 15. The anvil blade 21 is helical means that the cutting edge thereof extends according to a helical line, arranged on an ideal cylindrical surface coaxial with the rotation axis A-A of the blade-holder 15. A perforating device 3 with a helical anvil blade and straight rotating perforating blades is described in US 5,125,302.

In other embodiments, as shown in the attached figures, the arrangement is the opposite: the perforating blades 19 are helical, while the anvil blade is straight. In this case, the perforating blades 19 are helical means that the cutting edge thereof can extend along a helical line lying on a cylindrical surface coaxial to the rotation axis A-A of the blade-holder 15.

In both cases, the arrangement is such that, by arranging the edge of the anvil blade 21 and the cylindrical surface, on which the cutting edges of the perforating blades 19 lie, at such a distance to bring blades and anvil blade in mutual contact, each perforating blade 19 comes into contact with the anvil blade 21 at a point that gradually moves along the longitudinal extension of the perforating blade 19 and the anvil blade 21. In practice, the contact between the cutting edge of each blade 19 and the anvil blade 21 starts at one end of the perforating blade 19 and of the anvil blade 21 and terminates at the opposite end. In this way, regardless of which element of the pair blade/anvil blade is the helical one or the straight one, each perforation line is generated gradually, with a so-called scissor-like cut, so as to make the operation of the perforating device 3 more uniform and to reduce the stresses on the web material N.

Preferably, the angle of the helix formed by the edges of the perforating blades 19 (or alternatively of the anvil blade 21) and the angular pitch between the perforating blades 19 are selected in such a way that in any angular position of the blade holder 15, there is always a point of contact between a perforating blade 19 and the anvil blade 21. This makes the operation of the perforating device 3 more uniform and regular, less noisy, and reduces the stresses on the mechanical components of the perforating device 3.

In order that the perforation lines generated by the perforating device 3 on the web material N are orthogonal to the feeding direction of the web material N and therefore orthogonal to the longitudinal edges thereof, the rotation axis A-A of the blade holder 15 and the axis B-B of the beam 22 supporting the anvil blade 21 are parallel to each other and inclined with respect to the feeding direction F of the web material N, by an angle different from 90° and more exactly by an angle corresponding to 90°-α, where α is the inclination angle of the perforating blades 19 or of the helical anvil blade 21.

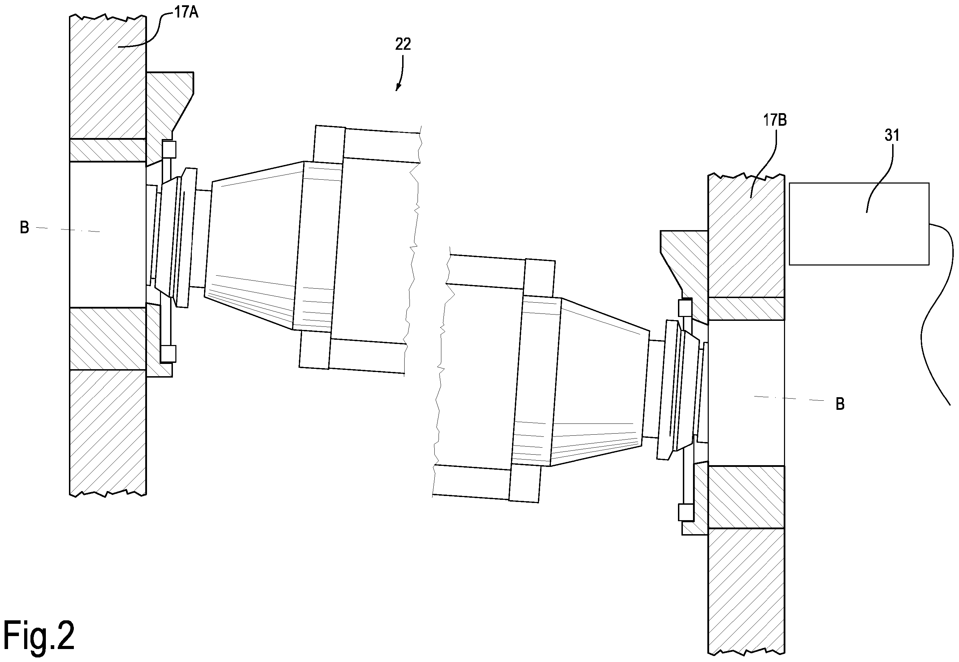

Advantageously, according to what is described herein, the perforating device 3 is associated with a vibration sensor 31. In some embodiments, the vibration sensor 31 is attached to the support structure 17. For example, as shown schematically in Fig.2, the vibration sensor 31 is attached to one of the two sides 17A, 17B of the support structure 17. It is also possible to apply the vibration sensor 31 to a different part or component of the perforating device 3 or to a part or component associated therewith. For example, the vibration sensor can be applied to the beam 22 bearing the anvil blade(s) 21, 21A, 21B. In some preferred embodiments, the vibration sensor 31 is arranged on one side of the perforating device 3, to use, as information contained in the signal generated by the vibration sensor, the variation of the signal due to the movement of the point of mutual contact between the perforating blade 19 and anvil blade 21 towards or away from the point where the vibration sensor 31 is applied.

The vibration sensor 31 can interface an electronic control unit 33, which can in turn be equipped with, or connected to, one or more user interfaces schematically indicated with 35, for example comprising a monitor. The electronic control unit 33 can be adapted to analyze the signal generated by the vibration sensor 31.

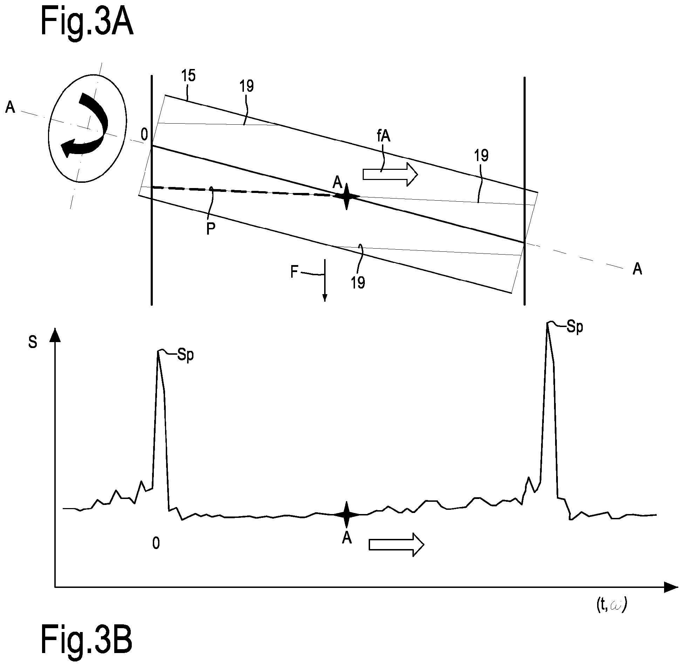

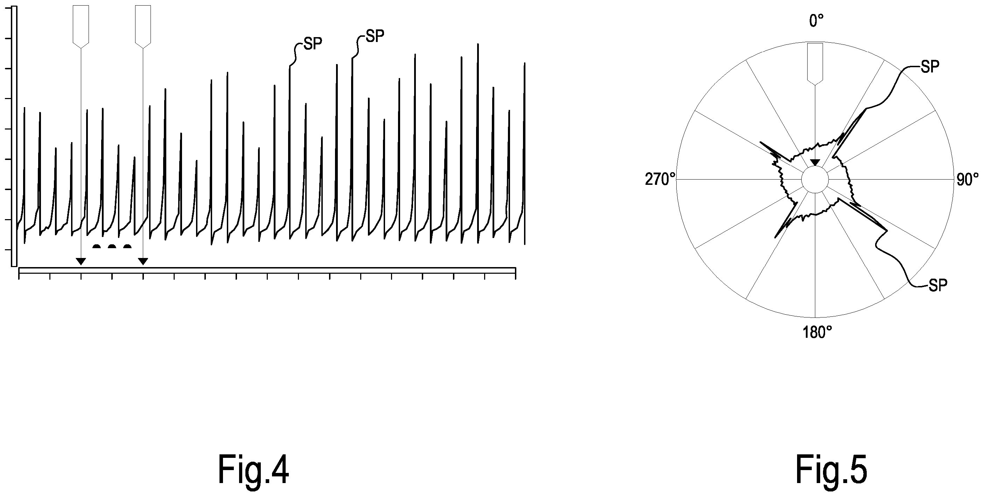

The signal generated by the vibration sensor 31 during the operation of the perforating device 3 has a cyclical pattern, illustrated in Figs 3A and 3B, and further shown in the diagrams of Figs. 4 and 5. Fig.3A shows schematically the rotating blade-holder 15 with the perforating blades 19 arranged helically around the rotation axis A-A. The letter A indicates the instant contact point of the perforating blade 19 temporarily working with the anvil blade 21. As a result of the helical arrangement of the perforating blades 19 described above, while the blade holder 15 rotates around the rotation axis A-A, the contact point A moves along the longitudinal extension of the perforating blade 19 and of the anvil blade 21. In the illustrated example, the movement is from right to left according to the arrow fA. The feeding direction of the web material N is indicated with F. The resulting perforation line is indicated with P. The perforation line P is perpendicular to the feeding direction F.

In the diagram 3B the signal S generated by the sensor 31 is shown on the γ-axis, while the rotation angle of the blade-holder 15 is shown on the x-axis. On the x-axis also the time t can be shown, that is directly proportional to the rotation angle, if the rotation speed of the blade-holder 15 is constant.

As shown in the diagram of Fig. 3B, the signal S is a time-varying signal, which is repeated for each blade and has peaks Sp corresponding to the angular positions (i.e. to the temporal instants) in which a new perforating blade 19 touches the anvil blade 21. Practically, it has been noticed that a vibration peak is generated on the support structure 17 each time a perforating blade 19 touches the anvil blade 21. If the perforating device 3 is correctly set and both the perforating blades 19 and the anvil blade 21 are intact, the profile of the waveform between two consecutive peaks Sp is approximately the same in all the cycles. Moreover, near each peak Sp the vibration signal gradually increases, indicating that the contact point of the working perforating blade 19 and the anvil blade 21 is approaching the end opposite to that in which the contact started, i.e. indicating the approaching of the moment when the perforating blade 19 will lose contact with the anvil blade 21. In the illustrated case, the signal is generated by a vibration sensor 31 positioned on the side of the support structure 17 where the mutual contact between blade 19 and anvil blade 21 terminates. The presence of any peaks or disturbances between the two peaks Sp identifying the start of a perforation is indicative of malfunctions. For example, it may mean that the rotating perforating blades temporarily lose contact with the anvil blade 21, thus generating a vibration peak. This can occur, for example, if the anvil blade 21 (21B, 21C) and/or the rotating perforating blades 9 have cracks. An intermediate peak repeated for each pitch of a perforating blade indicates a breakage of the anvil blade 21. A peak occurring only once for each complete rotation of the rotating blade-holder 15 is indicative of a breakage of one of the rotating perforating blades 19.

Fig. 4 shows a diagram similar to that of Fig.3B in a real situation and for a time interval during which the blade holder 15 performs a plurality of rotations. The intensity of the signal S is shown on the y-axis and the number of revolutions (n) of the blade holder 15 is shown on the x-axis. The number of peaks Sp for each revolution (i.e. for every 360° rotation) is equal to the number of perforating blades 19 provided on the blade-holder 15. In this example the number is 4.

The diagram of Fig.5 is a polar diagram showing the signal generated by the vibration sensor 31 on 360° rotation. At every revolution, if there are no alteration factors, such as for example damages to a perforating blade 19, the signal S of the diagram of Fig. 5 is repeated approximately equal to itself, i.e. for each revolution of the blade holder the signal S approximately overlaps to the previous signal.

By analyzing the signal S through a control unit 33, more specifically by analyzing the pattern over time of the signal S, much information can be obtained useful both for a proper adjustment of the perforating device 3, and for carrying out a continuous supervision and control of the proper operation over time of the perforating device 3. In particular, the signal S generated by the vibration sensor 31 can be used for one or more of the following purposes or functions.

The signal peaks Sp can be used to properly adjust the position of the individual perforating blades 19, so that each of them has approximately the same degree of interference with the anvil blade 21. In fact, the greater the degree of interference between the perforating blade 19 and anvil blade 21, the greater the intensity of the signal peak Sp. If the perforating blades 19 are properly adjusted, so as to have all about the same degree of interference with the anvil blade 21, the peaks Sp generated in a complete rotation of the blade-holder 15 are approximately the same.

The absolute value of the peak Sp is indicative of the interference between the perforating blade 19 and the anvil blade. It is possible to experimentally identify optimal peak values Sp, corresponding to optimal degrees of interference between each perforating blade 19 and the anvil blade 21. It is therefore possible to proceed for example in the following manner. Once the positions of the individual perforating blades 19 on the blade-holder 15 have been adjusted so that the peaks Sp are equal to one other, it is possible to adjust the mutual position between anvil blade 21 and blade-holder 15, until the correct mutual interference is achieved.

During operation of the perforating device 3, any increase or decrease in all peak values Sp may be indicative of an alteration or drift of the mutual distance between the cutting edge of the anvil blade 21 and the cutting edges of the perforating blades 19. In particular, a decrease in the peak signal Sp can be indicative of wear of the perforating blades 19. Thus, for example, it is possible to set minimum thresholds, below which the replacement of the perforating blades 19 and/or of the anvil blade 21 can be required.

Still during operation, a variation of one or more of the peaks Sp with respect to the others may be indicative of an alteration of the position of a single or of some perforating blades 19, or of excessive wear of a single or of some perforating blades 19. In this case again, minimum thresholds can be used to signal the need for replacement of one or more perforating blades 19.

Any anomalies of the intermediate signal between consecutive Sp peaks can be indicative of a localized damage of the respective perforating blade 19. For example, the breaking of a piece of the cutting edge of a perforating blade 19 can generate, in the signal between two consecutive Sp peaks, anomalous intermediate peaks interspersed with areas without vibrations. This may be indicative of the fact that a piece of the edge of the respective perforating blade 19 has detached. If the anomaly is the same in all the intervals between the four peaks Sp, this can be indicative of damage to the anvil blade 21.

In some cases the information contained in the signal S of the vibration sensor 31 can be used to detect other anomalies, for example an abnormal increase of the interference on all the perforating blades 19 (increase of all peak signals Sp). This can be indicative, for example of overheating of the perforating device 3 or of some parts thereof, with consequent abnormal thermal expansion, for example an expansion of the blade-holder 15. This situation can cause a detectable increase of all the peaks of the signal S.

In further embodiments, the signal S of the vibration sensor can also be used to perform a continuous adjustment of the perforating device 3, by means of an adjustment loop. By setting maximum and minimum thresholds of the signal peaks Sp it is possible, for example, to move the position of the anvil blade 21 and/or of the axis A-A of the blade holder 15 in an automatic way, by means of support slides and numerically controlled servo-motors.

The previous description refers to a system comprising a vibration sensor adapted to detect the mechanical vibration of the support structure 17. This embodiment can be particularly advantageous and beneficial in terms of reliability and/or simplicity.

In other embodiments, it is possible to obtain information on the mutual interaction between the fixed anvil blade 21; 21B; 21C and the rotating perforating blades 19 by using different parameters and different sensors from those described above.

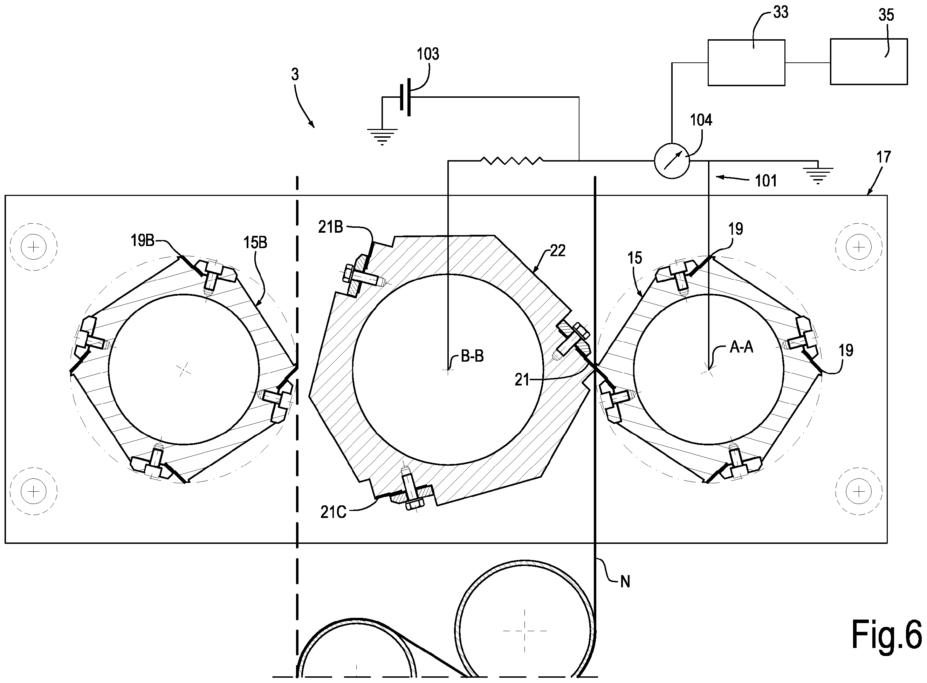

Figs. 6 to 9 show an embodiment, wherein a sensor adapted to detect an electrical parameter is used, for example a voltage, indicative of the mutual interaction between rotating perforating blades 19 and fixed anvil blade 21; 21B; 21C. 21B; 21C.

Fig. 6 schematically illustrates the perforating device 3 in an embodiment of this type. The same reference numbers indicate equal or corresponding parts to those described with reference to the embodiment describe above. Fig.6 schematically indicates a sensor 104 adapted to detect an electrical parameter, for example a voltage. The sensor 104 is connected to the system comprising the rotating blade-holder with the perforating blades 19 and the fixed anvil blade 21; 21B; 21C so as to be able to detect a voltage between the anvil blade 21 (or 21B, 21C, depending on which of the anvil blades operating) and the rotating perforating blades 19. In the schematic and exemplary embodiment of Fig. 6 the sensor 104 is inserted in a measurement circuit 101, which comprises a voltage source 103, for example a direct voltage source, preferably a low voltage. In some embodiments, the voltage of the source 103 is 24 Volts. The sensor 104 is functionally connected to the electronic control unit 33 and provides a voltage signal. The voltage detected by the sensor 101 is approximately equal to the voltage of the source 103 when there is no contact between the rotating perforating blades 19 and the anvil blade 21, while it is substantially lower, when the measurement circuit where the anvil blade 21 and the rotating perforating blades 19 are inserted, is closed, i.e. when there is a contact between anvil blade 21 and at least one of the rotating perforating blades 19.

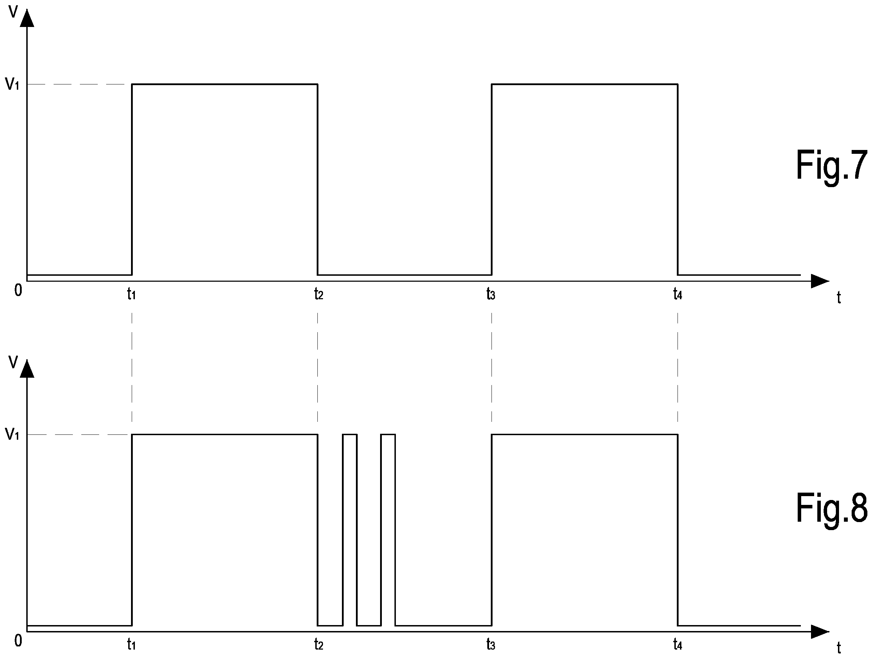

Fig. 7 schematically shows the voltage signal generated by the sensor 104 in the case in which the perforating device 3 is set so that there is no continuous contact between rotating perforating blades 19 and fixed anvil blade 21. This situation can occur, for example, if there are only one or two rotating perforating blades 19, so that for each complete rotation of the blade-holder 15 there are one or two time intervals in which there is no mutual contact between the rotating perforating blades 19 and the anvil blade 21.

In the diagram of Fig.7 the x-axis shows the time and the y-axis shows the voltage signal detected by the sensor 104. In the time intervals (t1-t2) and (t3-t4) there is no contact between the rotating perforating blades 19 and anvil blade 21, while in the interval (t2-t3) the perforation is performed. Fig.7 shows a condition of proper functioning.

If a perforating blade is broken and/or if the anvil blade is broken or if the perforating device is not well adjusted, the voltage signal is deformed and has voltage peaks in the range (t2-t3) as shown schematically in Fig.7. The electronic control unit 33 can detect this anomaly and trigger an alarm or provide a notification.

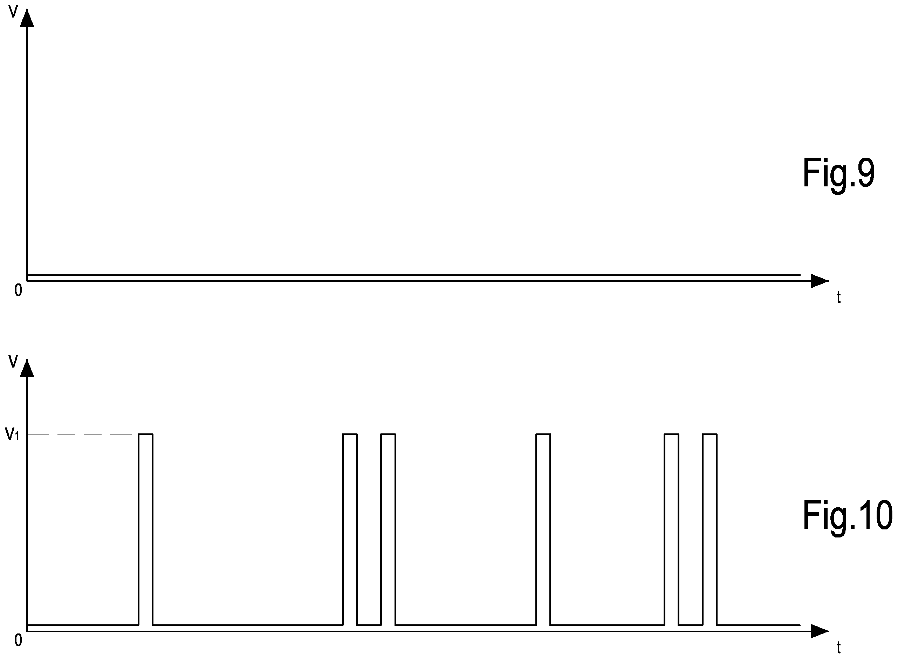

If the perforating blades 19 are in such a number and of such a configuration as to obtain a continuous contact between at least one perforating blade 19 and the anvil blade 21, the voltage signal is substantially continuous and low. Operating anomalies, due for example to areas lacking the cutting edges of blades and/or of the anvil blade, cause a temporary opening of the measurement circuit and therefore voltage peaks, as shown schematically in the diagram of Fig.10, where the time is still in abscissa and the signal generated by the sensor in ordinate.

In a further embodiment it is possible to position a linear load cell, or a matrix of load cells, or in general one or more load sensors, under the fixed anvil blade, or each anvil blade 21, 21B, 21C, to detect the load generated during the perforation, caused by the mutual interaction with the rotating perforating blades 19. It is also possible, in general, to arrange the load cells in combination with the rotating perforating blades 19, but this is less advantageous in that it requires a greater number of load sensors and also requires that the signal generated by the load sensors is transferred from the rotating blade holder 15 to the fixed electronic control unit 33.

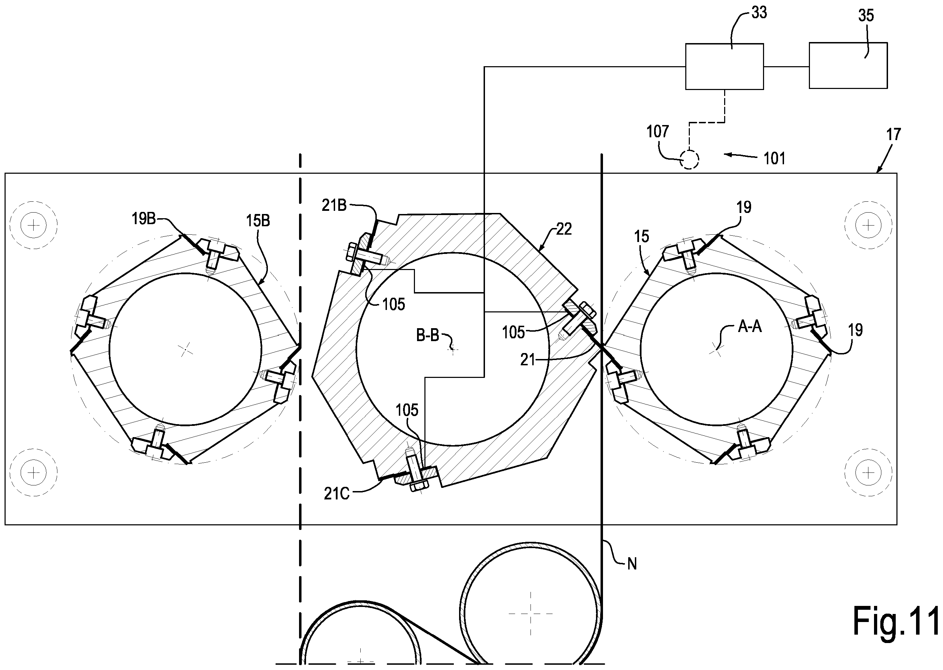

Fig. 11 shows load sensors, for example load cells 105 associated with each fixed anvil blade 21; 21B; 21C. The sensors 105 interface with the electronic control unit 33. The remaining components, substantially the same or equivalent to those already described, are indicated with the same reference numbers.

Also in this case, irregularities in the signal read by the load cell 105 is indicative of a perforation performed incorrectly or even of the failure to perform the perforation. Furthermore, from the analysis of the load signal generated by the interaction of the fixed anvil blade 21 with the rotating perforating blades 19 it is possible to understand whether the interference between rotating blades and anvil blade is excessive (excess load) or is too low (little interaction between blades and anvil blade). Based on this signal it is possible to automatically adjust the interaction of the rotating perforating blades 19 with the fixed anvil blade 21; 21B; 21C to restore the correct execution of the perforations.

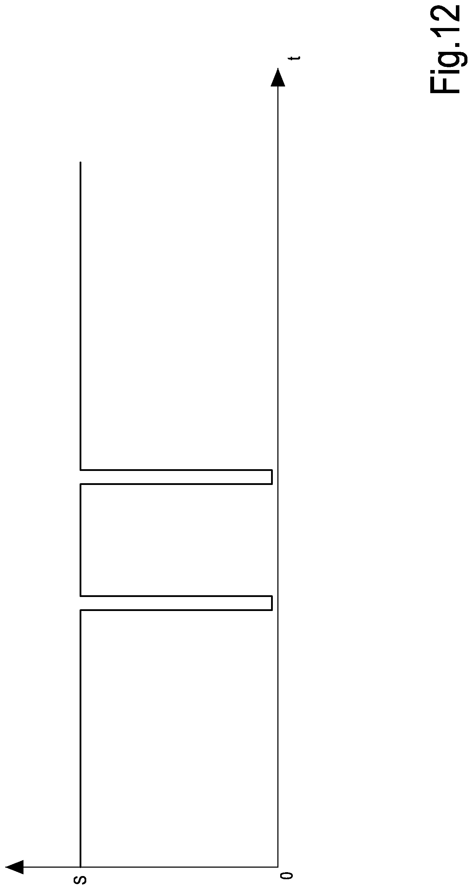

Fig.12 illustrates a simplified and illustrative diagram showing the signal of the load sensor in ordinates as a function of time (in abscissae). The value S of the signal is indicative of the interference between rotating perforating blades and anvil blade and can be adjusted so as to bring it to the required value, by increasing or reducing the distance between blade holder 15 and beam 22. The signal of Fig. 12 is generated in the case of continuous contact between perforating blades 19 and anvil blade 21. The points where the signal drops abruptly are indicative of a malfunction, for example of broken sections of the cutting edges of blades 19 and anvil blade 21.

In still further embodiments a sound signal can be used as a parameter indicating the mutual co-action or interaction between rotating perforating blades 19 and anvil blade 21; 21B; 21C. This sound signal can be detected with one or more sensors, for example microphones, one of which is schematically indicated in broken lines with 107 in Fig.11, interfaced with the electronic control unit 33. By analyzing the frequency signal detected by the sensor 107 it is possible to understand if a perforation is performed correctly or not. For example, if the module of the detected noise in dB is too large, it is possible that the interference between rotating perforating blades 19 and anvil blade 21; 21B; 21C is too high. If the acoustic vibration is not constant but disturbed and/or if anomalous peaks are detected in some frequencies, it is possible that the perforation is not constant, for example because a breakage happened in one or more of the rotating perforating blades 19 and/or in the anvil blade 21.

As previously indicated, problems similar to those encountered in perforating devices can also occur in cutting devices which divide a web material into separate sheets, for example a single-ply or multi-ply tissue paper in single sheets which can be folded and stacked. A non-limiting example of machines using such cutting devices are the so-called interfolding machines, which cut one or two webs of cellulosic material to form packs of interleaved sheets.

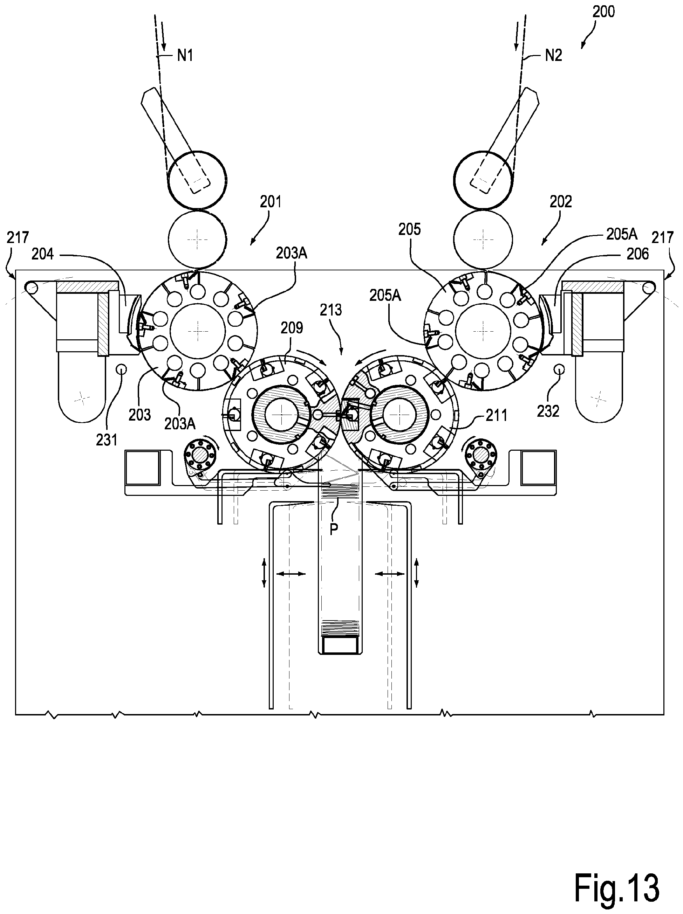

By way of example, Fig.13 shows a front view of an interfolding machine comprising two cutting devices according to the present invention. The interfolding machine 200 comprises a first feed path for a first continuous web material N1 of tissue paper and a second feed path for a second continuous web material N2 of tissue paper. A first cutting device 201 is arranged along the first path, the cutting device comprising a first rotating cutting roller 203 provided with angularly spaced rotating cutting blades 203A. The first rotating cutting roller 203 constitutes a blade holder of the cutting device 201. The rotating cutting blades 203A co-act with a first stationary anvil blade 204. In the illustrated example, the stationary anvil blade 204 has a helical shape, while the rotating cutting blades 203A have a straight shape, parallel to the axis of rotation of the blade-holder or rotating cutting roller 203. However, an opposite arrangement is not excluded, with a straight stationary anvil blade and helical rotating cutting blades.

A second cutting device 202 is arranged along the second path, substantially mirroring the first cutting device 201. The second cutting device 202 comprises a rotating cutting roller 205, provided with angularly spaced blades 205A. The rotating cutting roller 205 constitutes a blade holder of the cutting device 202. The blades 205A co-act with a second stationary anvil blade 206.

In a known manner, the first rotating blade holder or cutting roller 203 and the second rotating blade holder or rotating cutting roller 205 are equipped with suction ports or other retaining means, to retain on the surface of the respective cutting rollers 3, 5 the sheets obtained by cutting the first and second continuous web material N1, N2, and transferring said sheets from the cutting rolls 203, 205 to interfolding rollers 209, 211. Said interfolding rollers 209, 211 rotate around rotation axes thereof parallel to each other and parallel to the rotation axes of the cutting rolls 203, 205. The two interfolding rollers 209, 211 form an interfolding nip 213. In a manner known per se, the interfolding rollers 209, 211 fold and interfold the sheets coming from the cutting devices 201, 202 to form a stack of sheets P.

Each continuous web material N1, N2 is guided around the respective rotating cutting roller 203, 205 and is fed between the rotating cutting roller or blade-holder 203, 205 and the stationary anvil blade 204, 206. The co-action of the rotating cutting blades 203A with the stationary anvil blade 204 cuts the continuous web material N1 into individual sheets, which are then transferred from the first rotating cutting roller or blade-holder 203 to the first interfolding roller 209. Similarly, the continuous web material N2 is guided around the second rotating cutting roller or blade holder 205 and cut into sheets by co-acting with the rotating cutting blades 205A with the stationary anvil blade 206. The individual sheets are then transferred from the second rotating cutting roller or blade-holder 205 to the second interfolding roller 211.

The interfolding machine 200 briefly described above is known. There are other types of interfolding machines which provide only one feed path for a single web material, and which are always provided with at least one cutting device.

According to what is described herein, regardless of the specific structure of the machine, the cutting device, or each of the cutting devices 201, 202 with which the machine is equipped, can be associated with a sensor adapted to detect a parameter indicative of a mutual interaction between the respective group of rotating blades and the respective anvil blade. In the diagram of Fig.13, a sensor associated with the first cutting device 201 is schematically indicated with 231 and a sensor associated with the second cutting device 202 is schematically indicated with 232. Each sensor 231, 232 can be made in any of the above ways described. The two sensors 231 and 232 are preferably equal to each other, but it is also possible to use different sensors for the two cutting devices 201, 202. The sensors 231, 232 can for example be mounted on, or associated with, a support structure 217 on which the rotating cutting rollers 203, 205 and the respective anvil blades are mounted.

Each sensor 231, 232 can provide a central control unit (not shown) with a signal containing information on the proper operation of the respective cutting device 201, 202, in a manner substantially similar to that described with reference to the perforating device of the previously illustrated embodiments.

The various sensors described above can be used together, instead of alternatively, exploiting in combination the different information they generate. For example, it is possible to combine a vibration sensor with a voltage sensor, to analyze the signal provided by the vibration sensor (Figs.3A, 3B, 4, 5) only or mainly when the signal provided by the voltage sensor ( Figs 6, 7, 8, 9, 10, 12) indicates the presence of a contact between the blades and the anvil blade. In this way, through the vibration signal, it is possible to determine the "quality" of the mutual co-action of blades and anvil blade. For example, an excessive vibration indicates a too strong interference; on the contrary, a decrease in intensity of the vibration signal means a gradual wearing-out of the blades, which can be balanced by an equally gradual movement of the blades and the anvil blade towards each other. An anomalous discontinuity in the voltage signal (Fig.8 or Fig.10), means that at some point there is no contact because of a broken blade. Therefore it is possible to generate an alarm or to stop the device. By combining and integrating the signal generated by the voltage sensor with the signal generated by the vibration sensor, it is possible to integrate the information coming from the voltage sensor with that coming from the vibration sensor and to understand whether an adjustment of the distance between blades and anvil blade can solve the anomaly detected by the voltage sensor, if necessary by acting differently on the two sides of the device.

The sound sensor can be used alternatively to, or in combination with a vibration sensor for detecting the vibrations of the mechanical structure and/or in combination with a voltage sensor (Fig.6).

Load cells detecting the stresses on the blades and/or on the anvil blade can also be used, as shown in Fig.11, in combination with one or more of the voltage, sound and vibration sensors.

In some embodiments, it is possible to provide a signal of mutual interaction between the blades and the anvil blade by means of a pair of load cells applied to the beam 22, on opposite sides with respect to the web material feed path, or applied to the rotating blade-holder 15, 15B. The two load cells detect a load that varies due to the movement of the contact point between the fixed anvil blade 21 and the rotating blades 19, resulting from scissor-like cutting or perforation. Consequently, the signal detected by a load cell varies in opposite way with respect to the signal detected by the opposite load cell. While one signal increases from a minimum value to a maximum value, the other signal decreases from a maximum value to a minimum value

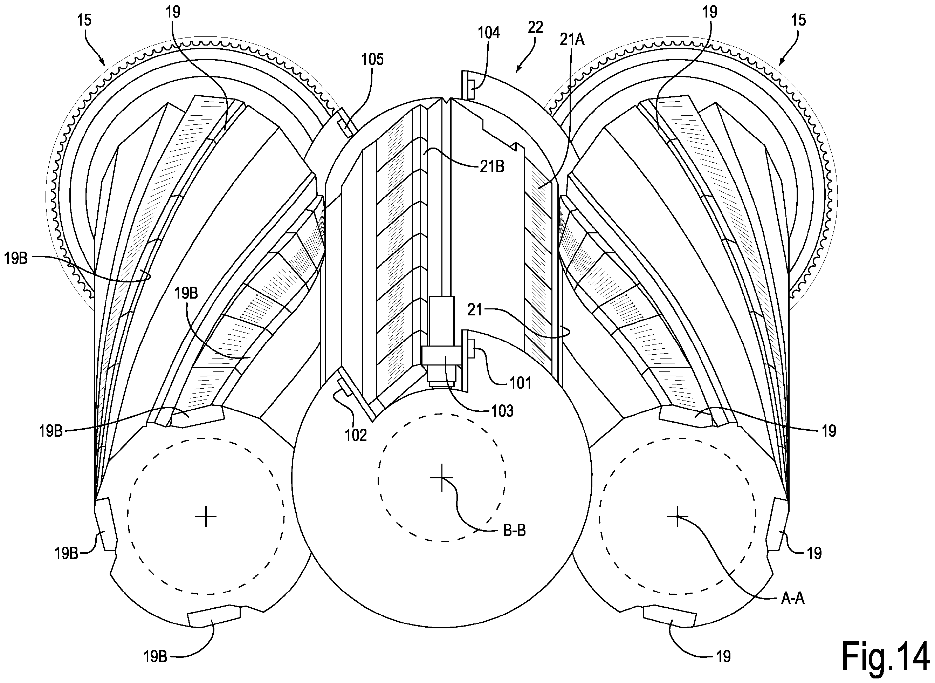

Fig.14 schematically shows an axonometric view of an arrangement similar to that of Fig.6. Equal numbers indicate equal or equivalent parts. The beam 22, which holds the fixed anvil blades 21, 21A, 21B, is pressed by an actuator, not shown, against one or another of a plurality of pairs of abutments. Each pair of abutments comprises an abutment on one end and an abutment on the opposite end of beam 22. The beam is pressed against one or the other of the pairs of abutments, depending on which anvil blade shall start working. A load cell is associated with each abutment. Pairs of load cells associated with two separate abutments are indicated with 101, 104 and 102, 105. In the arrangement of Fig.14 the load cells 101, 104 are operative, associated with the abutments against which the beam 22 is pressed.

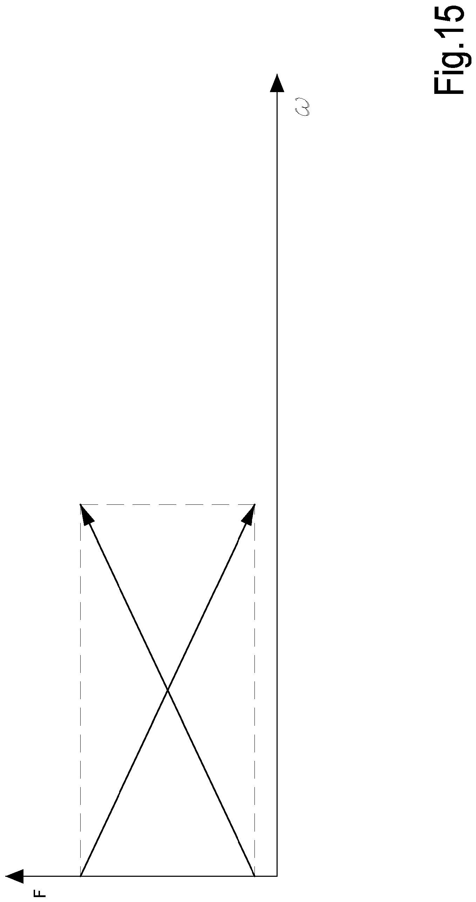

Fig.15 shows the pattern of the force detected by each of the two load cells as a function of the angle of rotation of the working rotating blade-holder 19 (or 19A). One force gradually increases and the other gradually decreases, since the two stresses on the two load cells at the opposite ends of the beam 22 vary as the point of contact between blade and anvil blade moves towards or away. The pattern of the two signals is repeated for each of the rotating blades 19 that starts working.

In practice, during cutting one of the two load cells detects an increasing load while the other is gradually unloaded. In theory, therefore, at the middle of the cut the load of the two load cells must be the same. The lack of contact between blade and anvil blade, or an insufficient or excessive interference between blade and anvil blade results in an altered signal, which is indicative of malfunctions or worn blades. Furthermore, an unbalance of the two load signals is a symptom of incorrect positioning of the blade and anvil blade, which requires adjustment to reduce the distance between the blade and anvil blade on one side and to increase this distance on the opposite side.

Alternatively or in combination with the load cells associated with the abutments integral with the beam 22, load cells can also be arranged on corresponding stop surfaces integral with the support structure, indicated with 103 in Fig.14.

Alternatively or in combination with the load cells described with reference to Fig. 14, sensors (load cells) can also be provided on the axis of the rotating blade-holders 15, 15A. These sensors can be applied, for example, to the support bearings of the blade-holders 15, 15B.

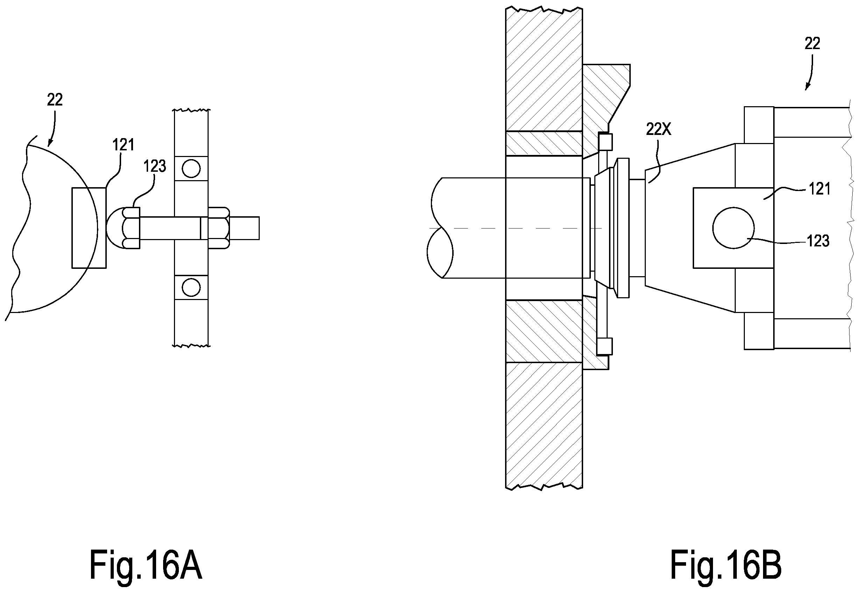

In some embodiments, it is possible to use sensors associated with the rotating blade holders or with the fixed beam 22, adapted to measure a force lying on a plane orthogonal to the axis of the rotating blade-holders 15, 15A, in horizontal direction, so as to measure the reaction forces due to the interactions of the rotating blades 19, 19B with the fixed anvil blade 21. Figs. 16A and 16B schematically show an end 22X of the fixed beam 22, to which a load cell 121 and an adjustable stop 123 are associated. A similar arrangement can be provided at the opposite end. This sensors configuration allows detecting a force that is independent of the pressure with which the fixed beam 22 carrying the anvil blades 21, 21A, 21B is pressed against the respective abutments 101, 104, 102, 105 (Fig.14).

The aforementioned configurations can also be provided in a cutting device, such as that of Fig.13, rather than in a perforating device.

In the case of a perforating device, for a final control of the perforation quality it is possible to use a high-speed camera, or a series of high-speed cameras adjacent to one another. The camera(s) detects the presence of perforations along the whole transverse length of the web material exiting from the perforating device. It is possible to detect all the perforations made by each blade or a subset of perforations made by some blades or by each blade, for example detecting a perforation every N perforations, where N can be for example comprised between 3 and 20, preferably between 3 and 10.

In Fig.14, the reference number 141 schematically indicates a video camera arranged downstream of the nip between the beam 22 and the rotating blade holder 15.

In general, if different types of sensors are provided, or even a plurality of sensors of the same type in different points of the rotating blade device, the signals generated by the sensors can be processed by a computer with an artificial intelligence software, which accordingly adjusts the device in order always to maintain the high quality of the cut and/or of the perforation, and also to increase the useful life of the blades and anvil blades, reducing the wear thereof and making it more uniform. Moreover, in case of failure, it is possible to stop the machine, generating an alarm. The artificial intelligence software can have internal self-learning algorithms (machine-learning) for self-learning the correct operation of the machine and/or a neural network. In the first case the software will learn and therefore correlate the proper operation of the machine with the inputs coming from one or more sensors. For example, the presence of the perforations detected by the camera, the correct voltage signal detected by the sensor 104 and the force signal detected by the load cells identify a correct perforation or cut. Vice versa, if the signal detected by the sensor 104 is correct but the forces detected by the load cells are not balanced, i.e. they do not follow the correct time path due to the mutual interaction between blade and anvil blade, it means that it is necessary to move one end of the perforating device closer and/or to move the other end away. If, for example, the signal detected by the sensor 104 is correct but the camera detects less marked perforations and/or the force detected by the load cells is decreasing, it means that the blades are wearing out and therefore it is necessary to bring the blade closer to the anvil blade.

Similar solutions can also be obtained with an artificial neural network which, starting from one or more inputs, is able to produce the correct outputs, for example the generation of alarms/alerts, the optimal continuous regulation of the perforating or cutting device, device control warnings, including for example a warning requesting maintenance or replacement of one or more cutting or perforating blades.

The invention has been described with reference to various embodiments; however, it will be clearly apparent to those skilled in the art that modifications, variants and omissions can be done to the invention, without however departing from the protective scope thereof as claimed in the attached claims.

## Claims

1. Device (3; 201; 202) with rotating blades for processing a web material (N; N1; N2), comprising:
a support structure (17; 217);
a rotating blade-holder (15; 15B; 203; 205), which rotates around a rotation axis and on which a group of rotating blades (19; 19B; 203A; 205A) is arranged;
an anvil blade (21; 21B; 21C; 204; 206) carried on said support structure (17; 217) adapted to co-act with said group of rotating blades (19; 19B; 203A; 205A); wherein each rotating blade (19; 19B; 203A; 205A) and the anvil blade (21; 21B; 21C; 204; 206) are so configured that, during rotation of the rotating blade-holder (15; 15B; 203; 205), each rotating blade (19; 19B; 203A; 205A) and the anvil blade (21; 21B; 21C; 204; 206) start reciprocal contact at a first end of the rotating blade (19; 19B; 203A; 205A), and terminate the reciprocal contact at a second end of the rotating blade (19; 19B; 203A; 205A), the point of reciprocal contact between each rotating blade (19; 19B; 203A; 205A) and the anvil blade (21; 21B; 21C; 204; 206) gradually moving from the first end to the second end of the rotating blade (19; 19B; 203A; 205A);
a sensor (31; 104; 105; 107; 231; 232) adapted to detect a parameter indicative of a mutual interaction between the group of rotating blades (19; 19B; 203A 205A) and the anvil blade (21; 21B; 21C; 204; 206) generating a signal of mutual interaction between blades and anvil blade, said signal lasting for the time frame of interaction between the rotating blade (19; 19B; 203; 205) and the anvil blade (21; 21B; 21C; 204; 206) during the movement of the point of reciprocal contact from said first end to said second end;
**characterized in that** the sensor (104; 231; 232) is adapted to detect a voltage applied between the anvil blade (21; 21B; 21C; 204; 206) and the group of rotating blades (19; 19B; 203A; 205A), said voltage signal containing information concerning the mutual interaction between the fixed anvil blade and the rotating blades.

2. The device (3; 201; 202) of claim 1, wherein the sensor (31; 104; 105; 107; 231; 232) is associated with the support structure (17; 217).

3. The device (3; 201; 202) of claim 1 or 2, and wherein a reference voltage is applied to the anvil blade (21; 21B; 21C; 204; 206) and the rotating blade-holder (15; 15B; 203; 205) is connected to a ground potential or vice versa.

4. The device (3; 201; 202) of one or more of the previous claims, wherein the anvil blade (21; 21B; 21C; 204; 206) is stationary with respect to the support structure (17; 217).

5. The device (3; 201; 202) of one or more of the previous claims, wherein the group of rotating blades (19; 19B; 203A; 205A) comprises at least one rotating blade and preferably a plurality of rotating blades (19; 19B; 203A; 205A) arranged at constant angular pitch around the rotation axis.

6. The device (3; 201; 202) of one or more of the previous claims, wherein: each rotating blade (19; 19B; 203A; 205A) is arranged on the rotating blade-holder (15; 15B; 203; 205) with a cutting edge thereof developing according to a substantially helical line and the anvil blade (21; 21B; 21C; 204; 206) has a rectilinear edge; or wherein each rotating blade (19; 19B; 203A; 205A) is arranged on the rotating blade-holder (15; 15B; 203; 205) with a cutting edge thereof developing according to a line parallel to the axis of rotation of the blade-holder and the anvil blade (21; 21B; 21C; 204; 206) has a helical edge.

7. The device of one or more of the previous claims, wherein the group of rotating blades (19; 19B; 203A; 205A) and the anvil blade (21; 21B; 21C; 204; 206) are so arranged that for each angle of rotation of the rotating blade-holder (15; 15B; 203; 205) there is only one point of contact between only one rotating blade (19; 19B; 203A; 205A) and the anvil blade (21; 21B; 21C; 204; 206).

8. The device (3; 201; 202) of one or more of the previous claims, wherein: the support structure (17; 217) comprises a first side panel and a second side panel (17A, 17B), between which the rotating blade-holder (15; 15B; 203; 205) and the anvil blade (21; 21B; 21C; 204; 206) are arranged; wherein the first side panel is arranged at the side of the first end of the rotating blade(s); and wherein the sensor (31; 104; 105; 107; 231; 232) is associated with the second side panel, that is arranged at the side of the second end of the rotating blade(s) (19; 19B; 203A; 205A).

9. The device (3; 201; 202) of one or more of the previous claims, comprising a control unit (33) configured to analyze a signal given by the sensor (31; 104; 105; 107; 231; 232).

10. The device (3; 201; 202) of claim 9, wherein the control unit (33) is adapted to adjust automatically the mutual interaction between the group of rotating blades (19; 19B; 203A; 205A) and the anvil blade (21; 21B; 21C; 204; 206) and/or to generate an alert according to the signal given by the sensor (31; 104; 105; 107; 231; 232).

11. The device (3; 201; 202) of claim 10, where the automatic adjustment of the mutual interaction between the group of rotating blades (19;19B; (203A) 205A) and the anvil blade (21; 21B; 21C; 204; 206) or the generation of alerts is performed through artificial intelligence algorithms, especially machine-learning and/or artificial neural networks.

12. The device (3; 201; 202) of one or more of the previous claims, wherein the group of rotating blades (19; 19B; 203A; 205A) and the anvil blade (21; 21B; 21C; 204; 206) are so configured as to generate: perforation lines along the web material (N); or to generate cutting lines along the web material (N1; N2) and to cut the web material into sheets.

13. A machine (1; 200) for processing a web material (N; N1, comprising a feed path of a web material (N; N1; N2), along which a device (3; 201; 202) of one or more of the previous claims is arranged, the feed path of the web material (N; N1; N2) passing between the rotating blade-holder (15; 15B; 203; 205) and the anvil blade (21; 21B; 21C; 204; 206).

14. The machine (1; 200) of claim 13, further comprising processing members (5; 209; 211) for processing the web material (N; N1; N2).

15. The machine (1; 200) of claim 13 or 14, wherein said machine is a rewinder or an interfolding machine.

16. A method for processing a continuous web material (N; N1; N2) comprising the steps of:
feeding the continuous web material (N; N1; N2) along a feed path between a blade-holder (15; 15B; 203; 205) comprising a group of rotating blades (19; 19B; 203A; 205A) and an anvil blade (21; 21B; 21C; 204; 206);
acting on the web material (N; N1; N2) through co-action between the group of rotating blades (19; 19B; 203A; 205A) and the anvil blade (21; 21B; 21C; 204; 206); wherein the group of rotating blades and the anvil blade act on the web material with a scissors-like cut, so that each rotating blade (19; 19B; 203A; 205A) and the anvil blade (21; 21B; 21C; 204; 206) co-act with each other in a point that translates, during rotation of the rotating blade, from a first end of the rotating blade to a second end of the rotating blade;
detecting at least one parameter indicative of a mutual interaction between the group of rotating blades (19; 19B; 203A; 205A) and the anvil blade (21; 21B; 21C; 204; 206), through a sensor generating a signal of mutual interaction between blades and anvil blade, said signal lasting for the time frame of interaction between the or each rotating blade (19; 19B; 203; 205) and the anvil blade (21; 21B; 21C; 204; 206) during the movement of the point of reciprocal contact from said first end to said second end;
**characterized in that** said at least one parameter is an electric voltage applied between the rotating blade-holder (15; 15B; 203; 205) and the anvil blade (21; 21B; 21C; 204; 206).

17. The method of claim 16, wherein the rotating blade-holder (15; 15B; 203; 205) supports a plurality of rotating blades (19; 19B; 203A; 205A) arranged at constant angular pitch, and wherein the rotating blades and the anvil blade are so arranged that during the rotation of the blade-holder only one rotating blade is in contact with the anvil blade.

18. The method of claim 16 or 17, comprising the steps of automatically adjusting the mutual interaction between the group of rotating blades (19; 19B; 203A; 205A) and the anvil blade (21; 21B; 21C; 204; 206) and/or generating an alert based on the analysis of a signal related to said parameter.

19. The method of one or more of claims 16 to 18, wherein the step of acting on the web material (N; N1; N2) through the co-action of the group of rotating blades (19; 19B; 203A; 205A) and the anvil blade (21; 21B; 21C; 204; 206) comprises the step of perforating the web material, or the step of cutting the web material into individual sheets.

## Patentansprüche

1. Vorrichtung (3; 201; 202) mit rotierenden Klingen zur Verarbeitung eines Bahnmaterials (N; N1, N2), umfassend:
eine Stützstruktur (17; 217);
einen rotierenden Klingenhalter (15; 15B; 203; 205), der sich um eine Rotationsachse dreht und auf dem eine Gruppe von rotierenden Klingen (19; l9B; 203A; 205A) angeordnet ist;
eine Ambossklinge (21; 21B; 21C; 204; 206), die von der Stützstruktur (17; 217) getragen wird und mit der Gruppe von rotierenden Klingen (19; 19B; 203A; 205A) zusammenwirken kann; wobei jede rotierende Klinge (19; 19B; 203A; 205A) und die Ambossklinge (21; 21B; 21C; 204; 206) so konfiguriert sind, dass während der Drehung des rotierenden Klingenhalters (15; 15B; 203; 205) jede rotierende Klinge (19; 19B; 203A; 205A) und die Ambossklinge (21; 21B; 21C; 204; 206) einen wechselseitigen Kontakt an einem ersten Ende der rotierenden Klinge (19; 19B; 203A; 205A) beginnen und den wechselseitigen Kontakt an einem zweiten Ende der rotierenden Klinge (19; 19B; 203A; 205A) beenden, wobei der Punkt des wechselseitigen Kontakts zwischen jeder rotierenden Klinge (19; 19B; 203A; 205A) und der Ambossklinge (21; 21B; 21C; 204; 206) sich allmählich von dem ersten Ende zu dem zweiten Ende der rotierenden Klinge (19; 19B; 203A; 205A) bewegt; einen Sensor (31; 104; 105; 107; 231; 232), der, eingerichtet einen Parameter zu erfassen, der eine gegenseitige Wechselwirkung zwischen der Gruppe von rotierenden Klingen (19; l9B; 203A; 205A) und der Ambossklinge (21; 21B; 21C; 204; 206) anzeigt, ein Signal der gegenseitigen Wechselwirkung zwischen Klingen und Ambossklinge erzeugt, wobei das Signal für den Zeitrahmen der Wechselwirkung zwischen der rotierenden Klinge (19; 19B; 203; 205) und der Ambossklinge (21; 21B; 21C; 204; 206) während der Bewegung des Punktes des gegenseitigen Kontaktes von dem ersten Ende zu dem zweiten Ende andauert;
**dadurch gekennzeichnet, dass**
der Sensor (104; 231; 232) eingerichtet ist, eine zwischen der Ambossklinge (21; 21B; 21C; 204; 206) und der Gruppe von rotierenden Klingen (19; 19B; 203A; 205A) angelegte Spannung zu erfassen, die , wobei das Spannungssignal Informationen über die gegenseitige Wechselwirkung zwischen der festen Ambossklinge und den rotierenden Klingen enthält.

2. Vorrichtung (3; 201; 202) nach Anspruch 1, wobei der Sensor (31; 104; 105; 107; 231; 232) mit der Stützstruktur verbunden (17; 217) ist.

3. Vorrichtung (3; 201; 202) nach Anspruch 1 oder 2, wobei eine Referenzspannung an die Ambossklinge (21; 21B; 21C; 204; 206) angelegt ist und der rotierende Klingenhalter (15; 15B; 203; 205) mit einem Erdpotential verbunden ist oder umgekehrt.

4. Vorrichtung (3; 201; 202) nach einem oder mehreren der vorhergehenden Ansprüche, wobei die Ambossklinge (21; 21B; 21C; 204; 206) in Bezug auf die Stützstruktur (17; 217) stationär ist.

5. Vorrichtung (3; 201; 202) nach einem oder mehreren der vorhergehenden Ansprüche, wobei die Gruppe von rotierenden Klingen (19; 19B; 203A; 205A) mindestens eine rotierende Klinge und vorzugsweise eine Vielzahl von rotierenden Klingen (19; 19B; 203A; 205A) umfasst, die mit konstantem Winkelabstand um die Drehachse angeordnet sind.

6. Vorrichtung (3; 201; 202) nach einem oder mehreren der vorhergehenden Ansprüche, wobei: jede rotierende Klinge (19; 19B; 203A; 205A) auf dem rotierenden Klingenhalter (15; 15B; 203; 205) mit einer im Wesentlichen schraubenförmig verlaufenden Schneidkante angeordnet ist und die Ambossklinge (21; 21B; 21C; 204; 206) eine geradlinige Kante aufweist; oder wobei jede rotierende Klinge (19; 19B; 203A; 205A) auf dem rotierenden Klingenhalter (15; 15B; 203; 205) angeordnet ist, wobei eine Schneidkante davon gemäß einer Linie parallel zur Rotationsachse des Klingenhalters verläuft und die Ambossklinge (21; 21B; 21C; 204; 206) eine spiralförmige Kante aufweist.

7. Vorrichtung nach einem oder mehreren der vorhergehenden Ansprüche, wobei die Gruppe der rotierenden Klingen (19; 19B; 203A; 205A) und die Ambossklinge (21; 21B; 21C; 204; 206) so angeordnet sind, dass für jeden Drehwinkel des rotierenden Klingenhalters (15; 15B; 203; 205) nur ein Kontaktpunkt zwischen nur einer rotierenden Klinge (19; 19B; 203A; 205A) und der Ambossklinge (21; 21B; 21C; 204; 206) besteht.

8. Vorrichtung (3; 201; 202) nach einem oder mehreren der vorhergehenden Ansprüche, wobei: Stützstruktur (17; 217) eine erste Seitenwandung und eine zweite Seitenwandung (17A, 17B) umfasst, zwischen denen der rotierende Klingenhalter (15; 15B; 203; 205) und die Ambossklinge (21; 21B; 21C; 204; 206) angeordnet sind; wobei die erste Seitenwandung an der Seite des ersten Endes der rotierenden Klinge(n) angeordnet ist; und wobei der Sensor (31; 104; 105; 107; 231; 2 2) mit der zweiten Seitenwandung verbunden ist, die an der Seite des zweiten Endes der rotierenden Klinge(n) (19; 19B; 203A; 205A) angeordnet ist.

9. Vorrichtung (3; 201; 202) nach einem oder mehreren der vorhergehenden Ansprüche, mit einer Steuereinheit (33), die so konfiguriert ist, dass sie ein von dem Sensor (31; 104; 105; 107; 231; 232) abgegebenes Signal analysiert.

10. Vorrichtung (3; 201; 202) nach Anspruch 9, wobei die Steuereinheit (33) so ausgelegt ist, dass sie die gegenseitige Wechselwirkung zwischen der Gruppe rotierender Klingen (19; 19B; 203A; 205A) und der Ambossklinge (21; 21B; 21C; 204; 206) automatisch einstellt und/oder einen Alarm entsprechend dem vom Sensor (31; 104; 105; 107; 231; 232) abgegebenen Signal erzeugt.

11. Vorrichtung (3; 201; 202) nach Anspruch 10, wobei die automatische Einstellung der gegenseitigen Wechselwirkung zwischen der Gruppe von rotierenden Klingen (19; l9B; (203A) 205A) und der Ambossklinge (21; 21B; 21C; 204; 206) oder die Erzeugung von Warnungen durch Algorithmen der künstlichen Intelligenz, insbesondere maschinelles Lernen und/oder künstliche neuronale Netze, erfolgt.

12. Vorrichtung (3; 201; 202) nach einem oder mehreren der vorhergehenden Ansprüche, wobei die Gruppe rotierender Klingen (19; l9B; 203A; 205A) und die Ambossklinge (21; 21B; 21C; 204; 206) so konfiguriert sind, dass sie Perforationslinien entlang des Bahnmaterials (N) erzeugen; oder dass sie Schnittlinien entlang des Bahnmaterials (N1; N2) erzeugen und das Bahnmaterial in Blätter schneiden.

13. Maschine (1; 200) zum Verarbeiten eines Bahnmaterials (N; N1), mit einem Zuführweg eines Bahnmaterials (N; N1; N2), entlang dessen eine Vorrichtung (3; 201; 202) nach einem oder mehreren der vorhergehenden Ansprüche angeordnet ist, wobei der Zuführweg des Bahnmaterials (N; N1; N2) zwischen dem rotierenden Klingenhalter (15; 15B; 203; 205) und der Ambossklinge (21; 21B; 21C; 204; 206) verläuft.

14. Maschine (1; 200) nach Anspruch 13, die ferner Bearbeitungselemente (5; 209; 211) zur Bearbeitung des Bahnmaterials (N; N1; N2) umfasst.

15. Maschine (1; 200) nach Anspruch 13 oder 14, wobei es sich bei der Maschine um eine Aufwickelmaschine oder eine Faltmaschine handelt.

16. Verfahren zur Verarbeitung eines kontinuierlichen Bahnmaterials (N; NI; N2), das die folgenden Schritte umfasst:
Zuführen des kontinuierlichen Bahnmaterials (N; N1; N2) entlang eines Zuführungspfades zwischen einem Klingenhalter (15; 15B; 203; 205), der eine Gruppe von rotierenden Klingen (19; 19B; 203A; 205A) umfasst und einer Ambossklinge (21; 21B; 21C; 204; 206);
Einwirken auf das Bahnmaterial (N; N1; N2) durch Zusammenwirken zwischen der Gruppe von rotierenden Klingen (19; 19B; 203A; 205A) und der Ambossklinge (21; 21B; 21C; 204; 206); wobei die Gruppe von rotierenden Klingen und die Ambossklinge auf das Bahnmaterial mit einem scherenartigen Schnitt einwirken, so dass jede rotierende Klinge (19; 19B; 203A; 205A) und die Ambossklinge (21; 21B; 21C; 204; 206) in einem Punkt zusammenwirken, der sich während der Drehung der rotierenden Klinge von einem ersten Ende der rotierenden Klinge zu einem zweiten Ende der rotierenden Klinge verschiebt;
Erfassen mindestens eines Parameters, der eine gegenseitige Wechselwirkung zwischen der Gruppe von rotierenden Klingen (19; 19B; 203A; 205A) und der Ambossklinge (21; 21B; 21C; 204; 206) anzeigt, durch einen Sensor, der ein Signal der gegenseitigen Wechselwirkung zwischen Klingen und Ambossklinge erzeugt, wobei das Signal für den Zeitrahmen der Wechselwirkung zwischen der oder jeder rotierenden Klinge (19; 19B; 203; 205) und der Ambossklinge (21; 21B; 21C; 204; 206) während der Bewegung des Punktes des gegenseitigen Kontakts von dem ersten Ende zu dem zweiten Ende andauert;
**dadurch gekennzeichnet, dass**
der mindestens eine Parameter eine zwischen dem rotierenden Klingenhalter (15; 15B; 203; 205) und der Ambossklinge (21; 21B; 21C; 204, 206) angelegte elektrische Spannung ist.

17. Verfahren nach Anspruch 16, wobei der rotierende Klingenhalter (15; 15B; 203; 205) eine Vielzahl von rotierenden Klingen (19; 19B; 203A; 205A) trägt, die mit konstantem Winkelabstand angeordnet sind, und wobei die rotierenden Klingen und die Ambossklinge so angeordnet sind, dass während der Rotation des Klingenhalters nur eine rotierende Klinge mit der Ambossklinge in Kontakt ist.

18. Verfahren nach Anspruch 16 oder 17, umfassend die Schritte des automatischen Einstellens der gegenseitigen Wechselwirkung zwischen der Gruppe von rotierenden Klingen (19; 19B; 203A; 205A) und der Ambossklinge (21; 21B; 21C; 204; 206) und/oder des Erzeugens eines Alarms auf der Grundlage der Analyse eines auf den Parameter bezogenen Signals.

19. Verfahren nach einem oder mehreren der Ansprüche 16 bis 18, wobei der Schritt des Einwirkens auf das Bahnmaterial (N; N1; N2) durch das Zusammenwirken der Gruppe von rotierenden Klingen (19; 19B; 203A; 205A) und der Ambossklinge (21; 21B; 21C; 204; 206) den Schritt des Perforierens des Bahnmaterials oder den Schritt des Schneidens des Bahnmaterials in einzelne Blätter umfasst.

## Revendications

1. Dispositif (3 ; 201; 202) à lames rotatives pour traiter un matériau en bande (N ; N1 ; N2), comprenant :
une structure de support (17 ; 217) ;
un porte-lames rotatif (15 ; 15B ; 203 ; 205), qui tourne autour d'un axe de rotation et sur lequel un groupe de lames rotatives (19 ; 19B ; 203A ; 205) est agencé ;
une lame formant enclume (21; 21B ; 21C ; 204 ; 206) portée par ladite structure (17 ; 217) apte à coopérer avec ledit groupe de lames rotatives (19 ; 19B ; 203A; 205A) ; chaque lame rotative (19 ; 19B ; 203A ; 205A) et la lame formant enclume (21 ; 21B ; 21C ; 204 ; 206) étant configurées de telle manière que, durant la rotation du porte-lames rotatif (15; 15B ; 203 ; 205), chaque lame rotative (19; 19B ; 203A ; 205A) et la lame formant enclume (21; 21B ; 21C; 204 ; 206) commencent un contact réciproque à une première extrémité de la lame rotative (19 ; 19B ; 203A; 205A), et termine ce contact réciproque à une deuxième extrémité de la lame rotative (19 ; 19B ; 203A ; 205A), le point de contact réciproque entre chaque lame rotative (19 ; 19B ; 203A ; 205A) et la lame formant enclume (21 ; 21B ; 21C ; 204 ; 206) se déplaçant graduellement de la première extrémité à la deuxième extrémité de la lame rotative (19 ; 19B ; 203A; 205A) ;
un détecteur (31 ; 104 ; 105 ; 107 ; 231 ; 232) apte à détecter un paramètre indicateur d'une interaction mutuelle entre le groupe de lames rotatives (19 ; 19B ; 203A; 205A) et la lame formant enclume (21 ; 21B ; 21C ; 204 ; 206) produisant un signal d'interaction mutuelle entre la lame rotative (19 ; 19B ; 203 ; 205) et la lame formant enclume (21 ; 21B ; 21C ; 204 ; 206) durant le mouvement du point de contact réciproque de ladite première extrémité à ladite deuxième extrémité ;
**caractérisé en ce que** le détecteur (104 ; 231 ; 232) est apte à détecter une tension appliquée entre la lame formant enclume (21 ; 21B ; 21C ; 204 ; 206) et le groupe de lames rotatives (19 ; 19B ; 203A ; 205A), ledit signal de tension contenant des informations concernant l'interaction mutuelle entre la lame formant enclume fixe et les lames rotatives.

2. Le dispositif (3 ; 201 ; 202) selon la revendication 1, dans lequel le détecteur (31 ; 104 ; 105 ; 107 ; 231 ; 232) est associé à la structure de support (17 ; 217).

3. Le dispositif (3 ; 201; 202) selon la revendication 1 ou 2, dans lequel une tension de référence est appliquée à la lame formant enclume (21; 21B ; 21C; 204; 206) et le porte-lames rotatif (15 ; 15B ; 203 ; 205) est connecté à la terre ou vice-versa.

4. Le dispositif (3 ; 201 ; 202) selon l'une ou plusieurs des revendications précédentes, dans lequel la lame formant enclume (21 ; 21B ; 21C ; 204 ; 206) est stationnaire par rapport à la structure de support (17 ; 217).

5. Le dispositif (3 ; 201 ; 202) selon l'une ou plusieurs des revendications précédentes, dans lequel le groupe de lames rotatives (19 ; 19B ; 203A ; 205A) comprend au moins une lame rotative et de préférence une pluralité de lames rotatives (19 ; 19B ; 203A ; 205A) agencées avec des écarts angulaires constants autour de l'axe de rotation.

6. Le dispositif (3 ; 201 ; 202) selon l'une ou plusieurs des revendications précédentes, dans lequel : chaque lame rotative (19 ; 19B ; 203A ; 205A) est agencée sur le porte-lames rotatif (15 ; 15B ; 203 ; 205) avec son arête de coupe se développant suivant une ligne sensiblement hélicoïdale et la lame formant enclume (21 ; 21B ; 21C ; 204 ; 206) a une arête rectiligne ; ou dans lequel chaque lame rotative (19 ; 19B ; 203A ; 205A) est agencée sur le porte-lame rotatif (15 ; 15B ; 203 ; 205) avec son arête de coupe s'étendant suivant une ligne parallèle à l'axe de rotation du porte-lames et la lame formant enclume (21 ; 21B ; 21C ; 204 ; 206) a une arête hélicoïdale.

7. Le dispositif selon l'une ou plusieurs des revendications précédentes, dans lequel le groupe de lames rotatives (19 ; 19B ; 203A ; 205B) et la lame formant enclume (21 ; 21B ; 21C ; 204 ; 206) est agencée de telle sorte que pour chaque angle de rotation du porte-lames rotatif (15 ; 15B ; 203 ; 205), il y a seulement un point de contact entre seulement une lame rotative (19 ; 19B ; 203A ; 205A) et la lame formant enclume (21 ; 21B ; 21C ; 204 ; 206).

8. Le dispositif (3 ; 201 ; 202) selon l'une ou plusieurs des revendications précédentes, dans lequel : la structure de support (17 ; 217) comprend un premier panneau latéral et un deuxième panneau latéral (17A ; 17B) entre lesquels le porte-lames rotatif (15 ; 15B ; 203 ; 205) et la lame formant enclume (21; 21B ; 21C; 204 ; 206) sont agencés ; dans lequel le premier panneau latéral est agencé sur un côté de la première extrémité de la ou des lame(s) rotative(s) ; et dans lequel le détecteur (31; 104 ; 105 ; 107 ; 231 ; 232) est associé au deuxième panneau latéral qui est agencé sur le côté de la deuxième extrémité de la ou des lame(s) rotative(s) (19 ; 19B ; 203A ; 205A).

9. Le dispositif (3 ; 201 ; 202) selon l'une ou plusieurs des revendications précédentes, comprenant une unité de commande (33) configurée pour analyser un signal donné par le détecteur (31 ; 104 ; 105 ; 107 ; 231 ; 232).

10. Le dispositif (3 ; 201 ; 202) selon la revendication 9, dans lequel l'unité de commande (33) est apte à régler automatiquement l'interaction mutuelle entre le groupe de lames rotatives (19 ; 19B ; 203A ; 205A) et la lame formant enclume (21; 21B ; 21C ; 204 ; 206) et/ou à générer une alerte suivant le signal donné par le détecteur (31 ; 104 ; 105 ; 107 ; 231; 232).

11. Le dispositif (3 ; 201; 202) selon la revendication 10, dans lequel le réglage automatique de l'interaction mutuelle entre le groupe de lames rotatives (19 ; 19B ; 203A; 205A) et la lame formant enclume (21; 21B ; 21C ; 204 ; 206) ou la génération d'alertes est réalisé à l'aide d'algorithmes d'intelligence artificielle, en particulier d'apprentissage machine et/ou de réseaux de neurones artificiels.

12. Le dispositif (3 ; 201 ; 202) selon l'une ou plusieurs des revendications précédentes, dans lequel le groupe de lames rotatives (19 ; 19B ; 203A ; 205A) et la lame formant enclume (21; 21B ; 21C ; 204 ; 206) sont configurés de manière à générer : des lignes de perforation le long du matériau en bande (N) ; ou à générer des lignes de coupe le long du matériau en bande (N1 ; N2) et pour couper en feuilles le matériau en bande.

13. Une machine (1; 200) pour traiter un matériau en bande (N ; N1) comprenant une piste d'alimentation pour un matériau en bande (N ; N1 ; N2), le long de laquelle un dispositif (3 ; 201; 202) selon l'une ou plusieurs des revendications précédentes est agencé, la piste d'alimentation du matériau en bande (N ; N1 ; N2) passant entre le porte-lames rotatif (15 ; 15B ; 203 ; 205) et la lame formant enclume (21; 21B ; 21C ; 204 ; 206).

14. La machine (1; 200) selon la revendication 13 ; comprenant en outre des organes de traitement (5 ; 209 ; 211) pour traiter le matériau en bande (N ; N1 ; N2).

15. La machine (1 ; 200) selon la revendication 13 ou 14, dans laquelle ladite machine est une rembobineuse ou une machine de pliage.

16. Un procédé pour traiter un matériau en bande continu (N ; N1 ; N2), comprenant les étapes consistant à :
faire avancer le matériau en bande continu (N ; N1 ; N2) le long d'une piste d'alimentation entre un porte-lames (15 ; 15B ; 203 ; 205) comprenant un groupe de lames rotatives (19 ; 19B ; 203A ; 205A) et une lame formant enclume (21 ; 21B ; 21C ; 204 ; 206) ;
agir sur le matériau en bande (N ; N1 ; N2) au moyen d'une coopération entre le groupe de lames rotatives (19 ; 19B ; 203A ; 205A) et la lame formant enclume (21 ; 21B ; 21C ; 204 ; 206) ; dans lequel le groupe de lames rotatives et la lame formant enclume agissent sur le matériau en bande en effectuant une coupe comme des ciseaux, de sorte que chaque lame rotative (19 ; 19B ; 203A ; 205A) et la lame formant enclume (21 ; 21B ; 21C ; 204 ; 206) coopèrent l'un avec l'autre en un point qui se déplace, durant la rotation de la lame rotative, d'une première extrémité de la lame rotative à une deuxième extrémité de la lame rotative ;
détecter au moins un paramètre indicateur de l'interaction mutuelle entre le groupe de lames rotatives (19 ; 19B ; 203A ; 205A) et la lame formant enclume (21; 21B ; 21C ; 204 ; 206), au moyen d'un détecteur produisant un signal d'interaction mutuelle entre les lames et la lame formant enclume, la durée dudit signal étant la durée d'interaction entre la ou chaque lame rotative (19 ; 19B ; 203 ; 205) et la lame formant enclume (21; 21B ; 21C ; 204 ; 206) durant le mouvement du point de contact réciproque de ladite première extrémité à ladite deuxième extrémité ;
**caractérisé en ce que** ledit ou lesdits paramètre(s) est(sont) une tension électrique appliquée entre le porte-lame rotatif (15 ; 15B ; 203 ; 205) et la lame formant enclume (21; 21B ; 21C ; 204 ; 206).

17. Le procédé selon la revendication 16, dans lequel le porte-lames rotatif (15 ; 15B ; 203, 205) porte une pluralité de lames rotatives (19 ; 19B ; 203A ; 205A) agencées avec des écarts angulaires constants et dans lequel les lames rotatives et la lame formant enclume sont agencées de telle sorte que durant la rotation du porte-lames seulement une lame rotative est en contact avec la lame formant enclume.

18. Le procédé selon la revendication 16 ou 17, comprenant les étapes consistant à régler automatiquement l'interaction mutuelle entre le groupe de lames rotatives (19 ; 19B ; 203A; 205A) et la lame formant enclume (21; 21B ; 21C; 204 ; 206) et/ou générer une alerte basée sur l'analyse d'un signal relatif audit paramètre.

19. Le procédé selon l'une ou plusieurs des revendications 16 à 18, dans lequel l'étape consistant à agir sur le matériau en bande (N ; N1 ; N2) au moyen d'une coopération du groupe de lames rotatives (19 ; 19B ; 203A; 205A) et la lame formant enclume (21 ; 21B ; 21C; 204 ; 206) comprend l'étape consistant à perforer le matériau en bande ou l'étape consistant à couper en feuilles individuelles le matériau en bande.
